# EUROPÄISCHE PATENTSCHRIFT

(11) **EP 2 703 241 B1**
(45) Veröffentlichungstag und Bekanntmachung des Hinweises auf die Patenterteilung: **13.07.2016**
(21) Anmeldenummer: 12464015.2
(22) Anmeldetag: 31.08.2012
(51) Int. Cl.: B60T 8/36, H01F 5/02

(54) **Elektronische Kontrolleinheit für Kraftfahrzeugbremssysteme**
Electronic control unit for motor vehicle braking systems
Unité de contrôle électronique pour systèmes de frein de véhicule automobile

(43) Veröffentlichungstag der Anmeldung: 05.03.2014
(73) Patentinhaber: Continental Teves AG & Co. oHG, 60488 Frankfurt (DE)
(72) Erfinder: Rosca, Marius George, 500117 Brasov (RO); Jürgens, Michael, 61200 Wölfersheim (DE)

(56) Entgegenhaltungen:
- EP-A- 0 691 250
- EP-A1- 0 705 747
- DE-A1- 19 734 491
- DE-A1-102005 003 293
- US-A- 6 000 679

## Beschreibung

Die Erfindung betrifft eine elektronische Kontrolleinheit gemäß Oberbegriff von Anspruch 1.

Die EP 0 705 747 A1 beschreibt eine elektrohydraulische Kontrolleinheit für ein Bremssystem, bei der Ventilspulen mittels Ventilspulenmontageelementen an einer an das Gehäuse zu montierenden Trägerplatte befestigt sind, wobei an den Ventilspulenmontageelementen zentral angeordnete Rasthaken in dafür vorgesehene Öffnungen an der Trägerplatte eingerastet werden. Bei dieser Lösung nachteilig ist jedoch die weitgehend steife mechanische Verbindung zwischen Trägerplatte und Ventilspulen. Um Fertigungstoleranzen und Wärmeausdehnung verbessert zu begegnen, werden die Ventilspulen gemäß der EP 0 520 047 B1 mittels an einer federnd gelagerten Trägerplatte angeordneter elastischer Halterungen befestigt, wodurch eine axiale und radiale Verlagerung der Ventilspulen möglich ist.

In der DE 197 43 842 A1 wird ein Ventilsteuergerät zur Aufnahme mehrerer Ventilspulen beschrieben, welches die Nachteile einer steifen mechanischen Verbindung sowie der separaten Trägerplatte für die Ventilspulen überwindet. Dazu weisen die Spulendrähte in eine elastische Umspritzung eingebettete Abkröpfungen auf, wobei die Enden der Spulendrähte direkt mit der Leiterplatte kontaktiert werden.

Die US 6 000 679 beschreibt einen Befestigungsmechanismus für Ventilspulenmodule einer Hydraulikmodulationseinheit eines Kraftfahrzeugbremssystems, wobei die Ventilspulenmodule Rastmittel zum Einrasten in Öffnungen einer Trägerplatte aufweisen und zur Einführung von Leiterenden der Ventilspulen in Kontaktlöcher einer Leiterplatte konische Ausformungen der Trägerplatte vorgesehen sind, auf welchen die Leiterplatte aufliegt. Um eine flexible und gegenüber Vibrationen beständige mechanische, magnetische sowie elektrische Verbindung zu erhalten, sind zudem Federelemente an der Trägerplatte und im Verlauf der Leiterenden der Ventilspulen vorgesehen.

Aus der gattungsbildenen EP 691 250 A geht ein Elektromagnetspulenpaket für den Einsatz mit integrierten Elektronik- und Hydraulikeinheiten in einem blockiergeschützten Kraftfahrzeug-Bremssystem hervor, welches ein Spulenpaket-Gehäuse und mehrere Elektromagneteinheiten aufweist. Die Elektromagneteinheiten sind dabei ausgelegt, jeweils ein entsprechendes Ventil und einen Ventilschaft der Hydraulikeinheit in entsprechenden zylindrischen Bohrungen aufzunehmen und weisen jeweils einen Haltering sowie Dichtungen auf, wobei die Halteringe Haltemittel zur Befestigung an dafür vorgesehenen Halteteilen des Spulenpaket-Gehäuses umfassen und die Dichtungen zwischen Spulenpaket-Gehäuse und der zugehörigen Elektromagneteinheit eingebaut sind.

In der DE 10 2005 003 293 A1 ist eine Befestigungsvorrichtung für eine Ventilspulenmodul eines Kraftfahrzeugbremsenreglers beschrieben, das eine erste und eine zweite Raststufe aufweist, welche mit einem tragenden Element des Ventilspulenmoduls stoffschlüssig verbunden sind, wobei die erste Raststufe zum Einrasten in einen Halter oder eine Auflage und die zweite Raststufe mittels einer Abschrägung eine elastische Kraftkomponente in axialer Richtung auf das Ventilspulenmodul erzeugt.

Aufgrund der Steigerung der Anzahl funktioneller Baugruppen im Kraftfahrzeug besteht jedoch der Bedarf, den Platzbedarf sowie das Gewicht bereits integrierter Systeme zu verringern beziehungsweise für leistungsfähigere Systeme nutzen zu können, um die Sicherheit der Fahrzeuginsassen weiter zu verbessern. Dafür muss unter anderem die Robustheit gegenüber Umwelteinflüssen, wie Vibrationen und Temperaturschwankungen, und der Funktionsumfang gesteigert werden. Zusätzlich wächst die Bedeutung des Komforts der Fahrzeuginsassen, was insbesondere die Vermeidung der Erzeugung, für die Fahrzeuginsassen unangenehmer Störungen betrifft. Bremsensteuergeräte müssen diese unterschiedlichsten Anforderungen erfüllen und dabei dem enormen Kostendruck standhalten.

Elektronische Kontrolleinheiten gemäß dem Stand der Technik erfüllen die an sie gestellten Anforderungen moderner Kraftfahrzeugbremssysteme nicht in ausreichendem Maße. Aufgabe der vorliegenden Erfindung ist es daher, eine elektronische Kontrolleinheit der eingangs genannten Art bereitzustellten, welches eine Modularisierung von Baugruppen in Bremssystemen sowie eine Verringerung des Platzbedarfs und Gewichts ermöglicht und möglichst kostengünstig herstellbar ist.

Diese Aufgabe wird durch die erfindungsgemäße elektronische Kontrolleinheit gemäß Anspruch 1 gelöst.

Die Erfindung beschreibt eine elektronische Kontrolleinheit für die Verbindung mit einer Hydraulikeinheit in einem Kraftfahrzeugbremssystem, umfassend zumindest ein, auf einen einzelnen Ventildom der Hydraulikeinheit aufschiebbares, elektrisch betätigbares Ventilspulenmodul für die Ansteuerung eines elektromagnetischen Hydraulikventils, mindestens eine Leiterplatte zur Aufnahme von elektrischen und/oder elektronischen Bauteilen für die Ansteuerung des Ventilspulenmoduls, mindestens ein, das Ventilspulenmodul und die Leiterplatte einfassendes Gehäuse, wobei das Ventilspulenmodul zumindest zwei Halterungen, einen Spulenkörper mit einer Ventildomaufnahmeöffnung, eine Zylinderspule, eine Spulenanschlusskontaktierung und ein, den Spulenkörper und die Zylinderspule mantelförmig umschließendes Spulenjoch umfasst, wobei das Ventilspulenmodul zusätzlich zur Spulenanschlusskontaktierung zumindest mittels der Halterungen mit mindestens einer Trägerplatte und/oder der Leiterplatte kraft- und/oder formschlüssig verbunden ist, welche sich dadurch auszeichnet, dass die Halterungen an einer ringförmigen Deckfläche des Spulenkörpers angeordnet und durch die Aussparungen einer Abdeckplatte hindurchgeführt sind und über die Abdeckplatte und das Spulenjoch hinausragen, wobei der Innendurchmesser der Deckfläche durch die Ventildomaufnahmeöffnung gebildet und die Aussparungen dergestalt sind, dass bei einem konstanten Abstand zwischen den Halterungen Ventilspulenmodule unterschiedlichen Durchmessers befestigbar sind. Die Trägerplatte ist dabei bevorzugt stoffschlüssig mit dem Gehäuse verbunden.

Vorteilhafterweise wird der benötigte Platzbedarf der elektronischen Kontrolleinheit verringert, da das durch die Ventilspulenmodule okkupierte Volumen reduziert wird. Durch die Anordnung der Halterung kann das Ventilspulenmodul in raumsparender Weise zur Trägerplatte und/oder Leiterplatte montiert werden. Öffnungen im Spulenjoch zur Aufhängung der Ventilspulenmodule gemäß dem Stand der Technik entfallen, wodurch die Zylinderspulen, bei geringerem baulichem Volumen, eine gleiche oder bei bestehender Baugröße eine vergrößerte magnetische Kraft aufbringen. Ein weiterer Vorteil ist, dass sich für einen konstanten Abstand der Halterungen für unterschiedliche Ventilspulenmodule eine weitgehende Unabhängigkeit der elektronischen Kontrolleinheit oder des Gehäuses von der Größe oder dem Durchmesser der Ventilspulenmodule ergibt. Dies unterstützt die weitere Modularisierung von Baugruppen in Bremssystemen, wodurch Kostenvorteile erzielt werden. Die Anzahl der Bauteile sowie die damit in Zusammenhang stehende Anzahl der Fertigungsschritte sowie deren Komplexität werden vorteilhafterweise verringert, was sich positiv auf Kosten und Gewicht auswirkt, da beispielsweise ein zur Bildung einer Halterung durchgeführtes, aufwändiges und daher preisintensives Umspritzen der Ventilspulen entfällt.

Es ist weiterhin bevorzugt, dass das Ventilspulenmodul zumindest ein elastisches Element umfasst, welches an der Abdeckplatte und/oder dem Spulenkörper angeordnet ist und insbesondere stoff- und/oder form- und/oder kraftschlüssig mit der Abdeckplatte und/oder dem Spulenkörper verbunden ist. Außerdem liegt das elastische Element des Ventilspulenmoduls ventilspulenmodulseitig bevorzugt an der Trägerplatte und/oder der Leiterplatte an und ist insbesondere federnd ausgeprägt. Das Ventilspulenmodul wird dadurch in vorteilhafter Weise einerseits positioniert und andererseits wird ein begrenzter Bewegungsraum erhalten, welcher beispielsweise Fertigungstoleranzen und Umwelteinflüsse auszugleichen vermag.

Besonders bevorzugt weisen die Trägerplatte und/oder die Leiterplatte eine oder mehrere Öffnungen und/oder Ausnehmungen auf, durch welche die Halterung des Ventilspulenmoduls zumindest teilweise hindurchgeführt ist, wobei ein Tragelement der Halterung auf der, dem Ventilspulenmodul abgewandten Seite der Trägerplatte und/oder der Leiterplatte aufliegt und das Tragelement insbesondere eine rasthakenförmige Beschaffenheit aufweist.

Gemäß einer bevorzugten Ausführungsform ist an der Trägerplatte und/oder der Leiterplatte zumindest eine Ausformung zur kraft- und/oder formschlüssigen Verbindung mit der Halterung des Ventilspulenmoduls vorgesehen, wobei die Ausformung insbesondere innerhalb der Öffnung, zwischen Ober- und Unterseite der Trägerplatte und/oder der Leiterplatte, angeordnet ist. In fertigungstechnisch einfacher Weise wird dadurch eine vorteilhafte Aufhängung für die Halterung des Ventilspulenmoduls auf Seiten der Trägerplatte und/oder Leiterplatte realisiert.

Besonders bevorzugt weist die Halterung zumindest eine Öffnung und/oder Ausnehmung auf, in welche die Ausformung der Trägerplatte und/oder der Leiterplatte eingebracht ist und das Tragelement der Halterung auf der Ausformung aufliegt.

Gemäß einer bevorzugten Ausführungsform weist die Halterung eine portalförmige Struktur auf, wobei das Tragelement zumindest zwei Stützelemente verbindet und die Stützelemente ventilspulenseitig stoffschlüssig mit dem Spulenkörper verbunden sind.

Die Trägerplatte und/oder die Leiterplatte weist bevorzugt eine oder mehrere Öffnungen auf, durch welche die Spulenanschlusskontaktierung hindurchgeführt ist.

Weitere bevorzugte Ausführungsformen ergeben sich aus den Unteransprüchen und der nachfolgenden Beschreibung von Ausführungsbeispielen an Hand von Figuren.

### Es zeigen

Fig. 1 eine Darstellung einer ersten Ausführungsform des erfindungsgemäßen Ventilspulenmoduls,
Fig. 2 eine Darstellung einer weiteren Ausführungsform des erfindungsgemäßen Ventilspulenmoduls,
Fig. 3 den Aufbau des Ventilspulenmoduls in Explosionsdarstellung und Darstellung für unterschiedliche Ventilspulenmodulgrößen bei konstantem Halterungsabstand,
Fig. 4 ein Ausführungsbeispiel einer Aufhängung eines Ventilspulenmoduls an einer Trägerplatte der elektronischen Kontrolleinheit,
Fig. 5 eine Anordnung der Ventilspulenmodule in der erfindungsgemäßen elektronischen Kontrolleinheit und
Fig. 6 ein nicht-erfindungsgemäßes Ausführungsbeispiel des Ventilspulenmoduls mit separatem Ventilspulenmodulgehäuse.

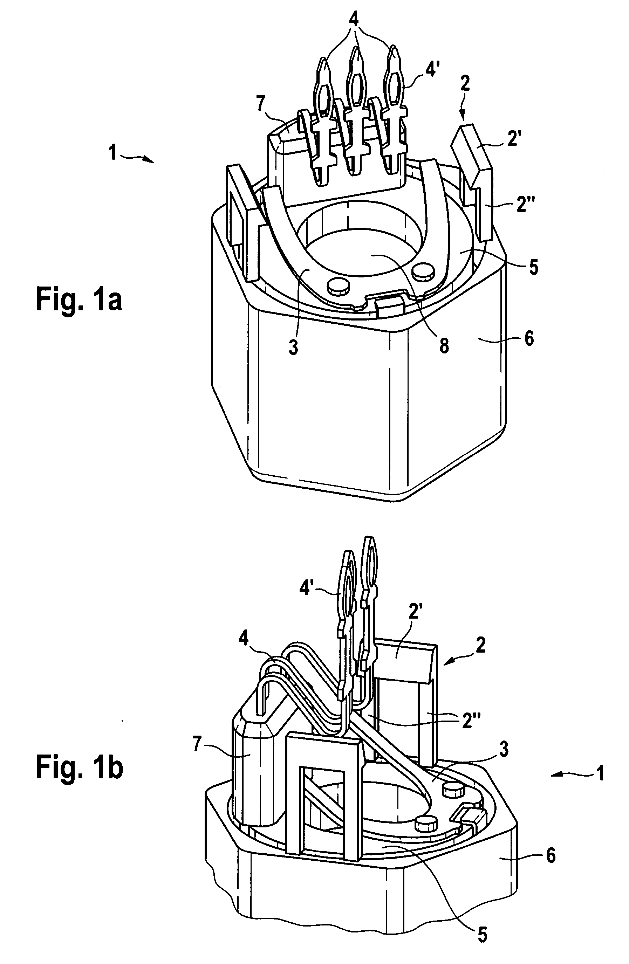

In der Fig. 1 ist eine erste Ausführungsform des erfindungsgemäßen Ventilspulenmoduls mit einem mehreckigen, ringförmigen Spulenjoch 6 dargestellt. Der Außenquerschnitt weist dabei eine weitgehend hexagonale Form auf, wobei die Form des Innenquerschnitts weitgehend rund ist. Die auf Abdeckplatte 5 radial gegenüberstehenden Halterungen 2 ragen über Abdeckplatte 5 und Spulenjoch 6 hinaus und weisen zudem rasthakenförmige Ausformungen an den zu Abdeckplatte 5 weitgehend parallelen Tragelementen 2' auf. Die Tragelemente 2' verbinden jeweils die zwei Stützelemente 2" einer Halterung 2. Das elastische Element 3 ist gemäß diesem Ausführungsbeispiel als metallisches Federblech mit zwei Schenkeln realisiert, welche, ausgehend von der an Abdeckplatte 5 genieteten Befestigung, mit wachsendem Abstand von Abdeckplatte 5, an den Seiten der etwa kreisrunden Ventildomaufnahme 8 entlang, weggebogen sind. Anstelle eines metallischen Federbleches können beispielsweise auch Elastomerringe über die Halterungen 2 geschoben werden oder an Trägerplatte 13 angeordnete, insbesondere stoffschlüssig verbundene elastische Elemente 3 verwendet werden, insofern eine toleranzausgleichende Funktion dadurch unterstützt wird. Die Spulenanschlusskontaktierungen 4 mit Einpresskontakten 4' zur Kontaktierung von Zylinderspule 11 mit einer Leiterplatte weisen ebenfalls elastische beziehungsweise federnde Elemente auf, wodurch keine starre elektrische Verbindung von Ventilspulenmodul 1 zu einer, in an sich bekannter Weise, angeordneten Leiterplatte vorliegt. Auf Seiten von Ventilspulenmodul 1 werden die Spulenanschlusskontaktierungen 4 durch Anschlusselement 7 an Zylinderspule 11 kontaktiert und zudem mechanisch stabilisiert.

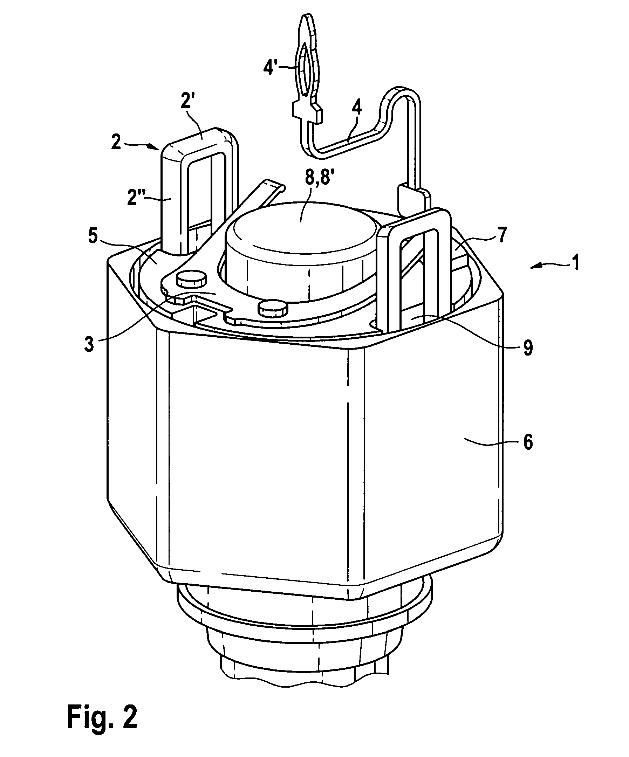

In Fig. 2 ist ein weiteres Ausführungsbeispiel des erfindungsgemäßen Ventilspulenmoduls dargestellt, wobei dieses über Ventildomaufnahme 8 auf Ventildom 8' einer nicht dargestellten hydraulischen Kontrolleinheit aufgeschoben ist. Das von der hydraulischen Kontrolleinheit wegweisende, obere Ende von Ventildom 8' ragt dabei über Abdeckplatte 5 hinaus. Die Teilenummerierung ist im Wesentlichen identisch zu der in Fig. 1, weshalb keine Wiederholung an dieser Stelle erfolgt. Im Unterschied zum Ausführungsbeispiel der Fig. 1 weist diese Ausführungsform lediglich eine Spulenanschlusskontaktierung 4 sowie Halterungen 2 auf, welche an Tragelement 2' ohne Rasthaken ausgeführt sind. Zum Herausführen der Halterungen 2 und Anschlusselement 7 aus Ventilspulenmodul 1 sind, zusätzlich zu Ventildomaufnahme 8, die Aussparungen 9 in Abdeckplatte 5 vorgesehen.

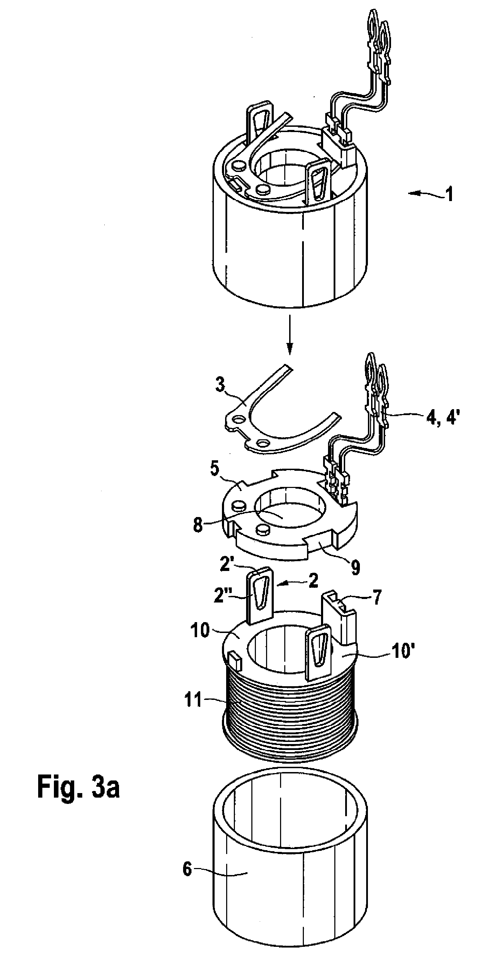

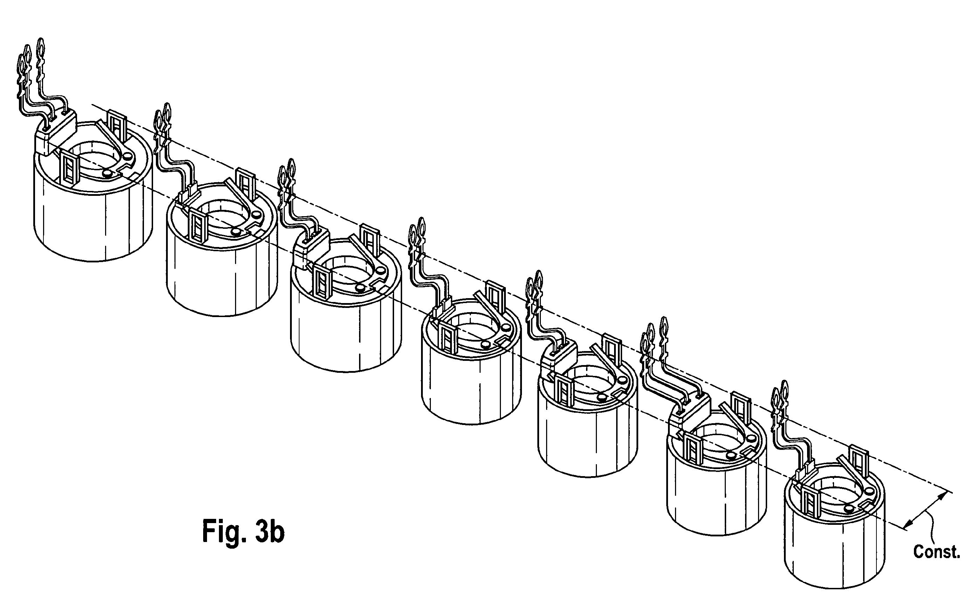

In Fig. 3 a) sind die Komponenten von Ventilspulenmodul 1 in Explosionsdarstellung abgebildet, wobei gemäß dieser Ausführungsform ein Spulenjoch mit rundem Außenquerschnitt vorgesehen ist. Die Halterungen 2 bilden mit Anschlusselement 7 und Spulenkörper 10 ein gemeinsames Bauteil, auf welches Zylinderspule 11 aufgewickelt und welches durch Spulenjoch 6 mantelförmig umschlossen ist. Wie weiter oben bereits beschrieben, werden die Halterungen 2 und Anschlusselement 7 über Aussparungen 9 in Abdeckplatte 5 aus Ventilspulenmodul 1 herausgeführt.

Die Aussparungen 9 können jedoch zusätzlich oder anstatt in Abdeckplatte 5 in Spulenjoch 6 vorgesehen werden, was die Verwendung von maßgleichen Abdeckplatten 5 bei Spulenjochen 6 unterschiedlichen Durchmessers ermöglicht. Gemäß diesem nicht dargestellten Ausführungsbeispiel werden aus Spulenjoch 6 die Halterungen 2 und Anschlusselement 7 insbesondere aus der entsprechend mit Aussparungen 9 versehenen Deckfläche herausgeführt, wobei Abdeckplatte 5 auf der den Halterungen 2 und der Deckfläche von Spulenjoch 6 gegenüberliegenden Seite angeordnet werden kann.

Das elastische Element 3 ist beispielsgemäß auf Abdeckplatte 5 durch Vernietung befestigt. In Fig. 3 b) wird aufgezeigt, dass durch einen solchermaßen realisierten Aufbau von Ventilspulenmodul 1 ein konstanter Abstand zwischen Halterungen 2 erreicht werden kann, welcher im Wesentlichen unabhängig vom Durchmesser von Ventilspulenmodul 1 sowie Ventildomaufnahme 8 ist, was den Modularisierungsgrad von Ventilspulenmodul 1 verbessert. Ein konstanter Abstand der Halterungen 2 erfolgt insbesondere durch Anpassung der Aussparungen 9 in Abdeckplatte 5.

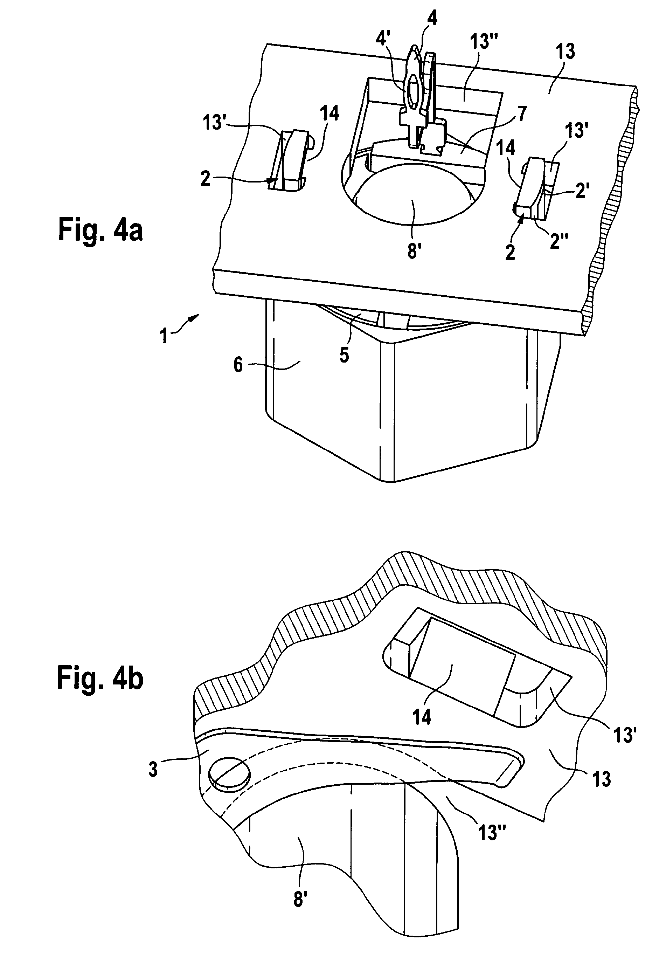

Die Integration von Ventilspulenmodul 1 in elektronische Kontrolleinheit 12 einer elektrohydraulischen Druckregelvorrichtung ist in Fig. 4 dargestellt. Wie in Fig. 4 a) dargestellt sind die Halterungen 2 durch Öffnungen 13' in Trägerplatte 13 teilweise hindurchgeführt. Tragelemente 2' liegen auf den Ausformungen 14 auf, während die Stützelemente 2'' seitlich der Ausformungen 14 geführt sind. Das elastische Element 3 liegt auf der dem Ventilspulenmodul 1 zugewandten Seite von Trägerplatte 13 an, wie in Fig. 4 b) dargestellt. Auf eine Abbildung von Ventilspulenmodul 1, ausgenommen elastisches Element 3, wurde zur verbesserten Veranschaulichung in Fig. 4 b) verzichtet. Die Federkraft bewirkt eine Anpresskraft der Tragelemente 2' auf die Ausformungen 14, womit die eigentliche mechanische Stabilität der Aufhängung erzeugt wird, ohne dabei eine steife Fixierung zu erhalten. Spulenanschlusskontakte 4 sind durch Öffnung 13'' in Trägerplatte 13 zu einer nicht dargestellten Leiterplatte geführt. Aufgrund der federnden Wirkung der Spulenanschlusskontakte 4 wird in Verbindung mit der elastischen Ventilspulenaufhängung ein Bewegungsfreiraum von Ventilspulenmodul 1 erhalten, um beispielsweise Fertigungstoleranzen oder thermische Ausdehnungen auszugleichen.

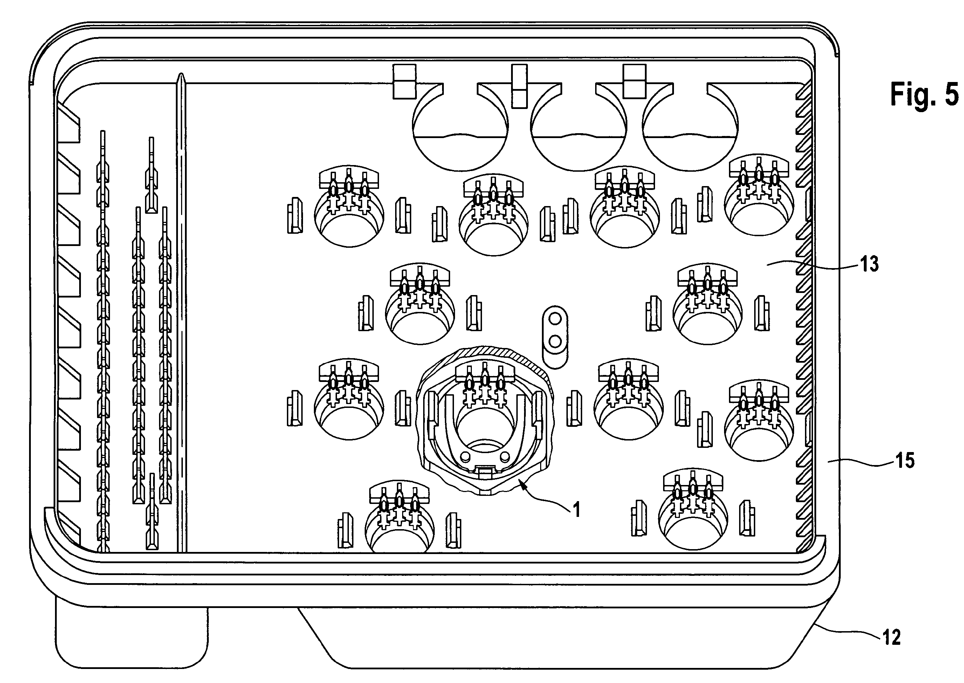

Fig. 5 zeigt eine Vielzahl montierter Ventilspulenmodulen 1 in elektronischer Kontrolleinheit 12, wobei zur verbesserten Veranschaulichung in der Darstellung Teile von Trägerplatte 13 sowie die Leiterplatte, an welche die Ventilspulenmodule kontaktiert werden und die im Wesentlichen planparallel zu Trägerplatte 13 aufgesetzt ist, nicht abgebildet sind. Gehäuse 15 der elektronischen Kontrolleinheit 12 und Trägerplatte 13 sind, wie der Fig. 5 ebenfalls zu entnehmen ist, stoffschlüssig miteinander verbunden und können in einem gemeinsamen Herstellungsprozess gefertigt werden. Entsprechend einer weiteren, nicht dargestellten Ausführungsform, sind die Ventilspulenmodule mittels Halterungen 2 direkt an der Leiterplatte aufgehängt, wodurch die Fertigung einer separaten Trägerplatte obsolet ist und die das bauliche Volumen weiter reduziert wird.

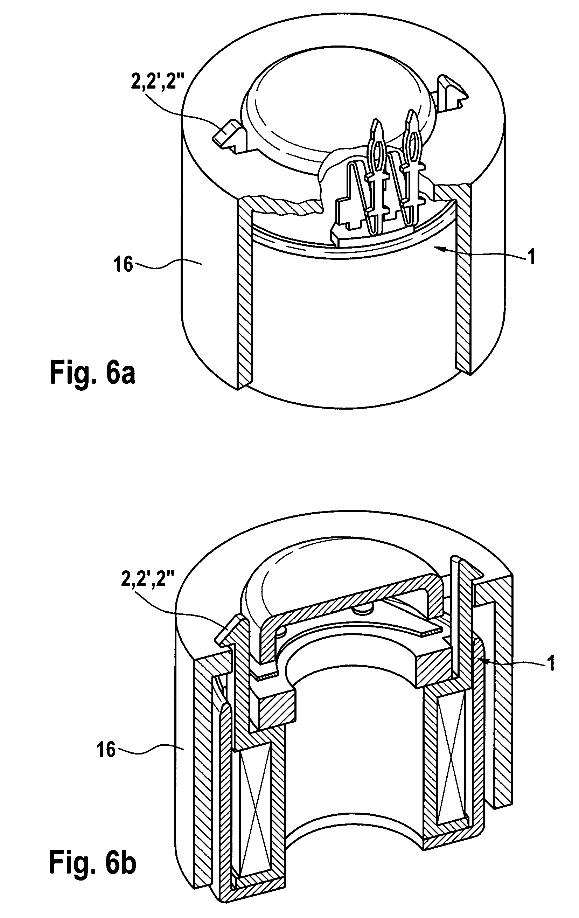

Fig. 6 zeigt ein weiteres nicht-erfindungsgemäßes Ausführungsbeispiel von Ventilspulenmodul 1 in Teilschnittdarstellung 6 a) und Schnittdarstellung 6 b), bei dem Halterungen 2 jeweils lediglich ein Stützelement 2'' aufweisen und die Trägerelemente 2' in einer rasthakenförmigen Struktur ausgebildet sind. Die Ausformungen 14 an Trägerplatte 13 oder der Leiterplatte können damit entfallen.
Die in Fig. 6 dargestellte Isolierkappe 16 kann für alle bevorzugten Ausführungsformen von Ventilspulenmodul 1 vorgesehen werden. Mit Isolierkappe 16 können beispielsweise mechanische beziehungsweise elektromagnetische Abschirmung von Ventilspulenmodul 1 gegenüber weiteren Komponenten der elektronischen Kontrolleinheit realisiert werden. Die Aufhängung von Ventilspulenmodul 1 erfolgt dabei in ebensolcher Weise wie bereits beschrieben.

| | | |
|---|---|---|
| Ventilspulenmodul | | 1 |
| Halterung 2 | | Halterung 2 |
| | - Tragelement | 2' |
| | - Stützelement | 2'' |
| Elastisches Element | | 3 |
| Spulenanschlusskontaktierung | | 4 |
| | - Einpresskontakt | 4' |
| Abdeckplatte | | 5 |
| Spulenjoch | | 6 |
| Anschlusselement | | 7 |
| Ventildomaufnahme | | 8 |
| | - Ventildom | 8' |
| Aussparungen in Abdeckplatte | | 9 |
| Spulenkörper | | 10 |
| | - Deckfläche | 10' |
| Zylinderspule | | 11 |
| Elektronische Kontrolleinheit | | 12 |
| Trägerplatte | | 13 |
| | - Öffnung für Halterung | 13' |
| | - Öffnung für SpulenAnschlusskontaktierung | 13'' |
| Ausformung für Halterung | | 14 |
| Gehäuse | | 15 |
| Isolierkappe | | 16 |

## Patentansprüche

1. Elektronische Kontrolleinheit (12) für die Verbindung mit einer Hydraulikeinheit in einem Kraftfahrzeugbremssystem, umfassend
- zumindest ein, auf einen einzelnen Ventildom (8') der Hydraulikeinheit aufschiebbares, elektrisch betätigbares Ventilspulenmodul (1) für die Ansteuerung eines elektromagnetischen Hydraulikventils,
- mindestens eine Leiterplatte zur Aufnahme von elektrischen und/oder elektronischen Bauteilen für die Ansteuerung des Ventilspulenmoduls (1),
- mindestens ein, das Ventilspulenmodul (1) und die Leiterplatte einfassendes Gehäuse (15),
- wobei das Ventilspulenmodul (1) zumindest zwei Halterungen (2), einen Spulenkörper (10) mit einer Ventildomaufnahmeöffnung (8), eine Zylinderspule (11), eine Spulenanschlusskontaktierung (4) und ein, den Spulenkörper (10) und die Zylinderspule (11) mantelförmig umschließendes Spulenjoch (6) umfasst,
wobei das Ventilspulenmodul (1) zusätzlich zur Spulenanschlusskontaktierung (4) zumindest mittels der Halterungen (2) mit mindestens einer Trägerplatte (13) und/oder der Leiterplatte kraft- und/oder formschlüssig verbunden ist, **dadurch gekennzeichnet, dass** die Halterungen (2) an einer ringförmigen Deckfläche (10') des Spulenkörpers (10) angeordnet und durch die Aussparungen (9) einer Abdeckplatte (5) hindurchgeführt sind und über die Abdeckplatte (5) und das Spulenjoch (6) hinausragen, wobei der Innendurchmesser der Deckfläche (10') durch die Ventildomaufnahmeöffnung (8) gebildet ist und die Aussparungen (9) dergestalt sind, dass bei einem konstanten Abstand zwischen den Halterungen (2) Ventilspulenmodule (1) unterschiedlichen Durchmessers befestigbar sind.

2. Elektronische Kontrolleinheit nach Anspruch 1, **dadurch gekennzeichnet, dass** die Trägerplatte (13) stoffschlüssig mit dem Gehäuse (15) verbunden ist.

3. Elektronische Kontrolleinheit nach Anspruch 1 oder 2, **dadurch gekennzeichnet, dass** das Ventilspulenmodul (1) zumindest ein elastisches Element (3) umfasst, welches an einer Abdeckplatte (5) angeordnet ist und stoff- und/oder form- und/oder kraftschlüssig mit der Abdeckplatte (5) verbunden ist.

4. Elektronische Kontrolleinheit nach Anspruche 3, **dadurch gekennzeichnet, dass** das elastische Element (3) des Ventilspulenmoduls (1) auf einer dem Ventilspulenmodul (1) zugewandten Seite an der Trägerplatte (13) und/oder der Leiterplatte anliegt und insbesondere federnd ausgeprägt ist.

5. Elektronische Kontrolleinheit nach mindestens einem der Ansprüche 1 bis 4, **dadurch gekennzeichnet, dass** die Trägerplatte (13) oder die Leiterplatte eine oder mehrere Öffnungen (13') oder Ausnehmungen aufweist, durch welche die Halterung (2) des Ventilspulenmoduls (1) zumindest teilweise hindurchgeführt ist, wobei ein Tragelement (2') der Halterung (2) auf der, dem Ventilspulenmodul (1) abgewandten Seite der Trägerplatte (13) und/oder der Leiterplatte aufliegt und das Tragelement (2') insbesondere eine rasthakenförmige Beschaffenheit aufweist.

6. Elektronische Kontrolleinheit nach Anspruch 5, **dadurch gekennzeichnet, dass** innerhalb der Öffnung (13') zumindest eine Ausformung (14) zur kraft- und/oder formschlüssigen Verbindung mit der Halterung (2) des Ventilspulenmoduls (1) vorgesehen ist, wobei die Ausformung (14) zwischen Ober- und Unterseite der Trägerplatte (13) oder der Leiterplatte angeordnet ist.

7. Elektronische Kontrolleinheit nach Anspruch 6, **dadurch gekennzeichnet, dass** die Halterung (2) zumindest eine Öffnung oder Ausnehmung aufweist, in welche die Ausformung (14) der Trägerplatte (13) und/oder der Leiterplatte eingebracht ist und das Tragelement (2') der Halterung (2) auf der Ausformung (14) aufliegt.

8. Elektronische Kontrolleinheit nach mindestens einem der Ansprüche 1 bis 7, **dadurch gekennzeichnet, dass** die Halterung (2) eine portalförmige Struktur aufweist, wobei das Tragelement (2') zumindest zwei Stützelemente (2'') verbindet und die Stützelemente (2'') ventilspulenseitig stoffschlüssig mit der Deckfläche (10') des Spulenkörpers (10) verbunden sind.

9. Elektronische Kontrolleinheit nach mindestens einem der Ansprüche 1 bis 8, **dadurch gekennzeichnet, dass** die Trägerplatte (13) und/oder die Leiterplatte eine oder mehrere Öffnungen (13'') aufweist, durch welche die Spulenanschlusskontaktierung (4) hindurchgeführt ist.

## Claims

1. Electronic control unit (12) for the connection to a hydraulic unit in a motor vehicle brake system, comprising
- at least one electrically actuated valve coil module (1) which can be fitted onto an individual valve dome (8') of the hydraulic unit, for driving an electromagnetic hydraulic valve,
- at least one circuit board for receiving electrical and/or electronic components for driving the valve coil module (1),
- at least one housing (15) which encapsulates the valve coil module (1) and the circuit board,
- wherein the valve coil module (1) comprises at least two mounts (2), a coil former (10) with a valve receiving opening (8), a cylinder coil (11), a coil connection contact means (4) and a coil yoke (6) which encloses the coil former (10) and the cylinder coil (11) in the form of casing,
wherein the valve coil module (1) is connected, as well as to the coil connection contacting means (4), to at least one carrier plate (13) and/or the circuit board at least by means of the mounts (2) in a frictionally locking and/or positively locking fashion, **characterized in that** the mounts (2) are arranged on an annular cover face (10') of the coil former (10) and are guided through the recesses (9) in a cover plate (5) and project beyond the cover plate (5) and the coil yoke (6), wherein the internal diameter of the cover face (10') is formed by the valve dome receiving opening (8) and the recesses (9) are such that when there is a constant distance between the mounts (2) valve coil modules (1) of different diameters can be attached.

2. Electronic control unit according to Claim 1, **characterized in that** the carrier plate (13) is connected to the housing (15) in a positively locking fashion.

3. Electronic control unit according to Claim 1 or 2, **characterized in that** the valve coil module (1) comprises at least one elastic element (3) which is arranged on the cover plate (5) and is connected to the cover plate (5) in a materially joined and/or positively locking and/or frictionally locking fashion.

4. Electronic control unit according to Claim 3, **characterized in that** the elastic element (3) of the valve coil module (1) bears on a side of the carrier plate (13) and/or of the circuit board which faces the valve coil module (1), and is, in particular, implemented in a sprung fashion.

5. Electronic control unit according to at least one of Claims 1 to 4, **characterized in that** the carrier plate (13) or the circuit board has one or more openings (13') or cutouts through which the mount (2) of the valve coil module (1) is at least partially guided, wherein a bearing element (2') of the mount (2) rests on the side of the carrier plate (13) and/or the circuit board facing away from the valve coil module (1), and the bearing element (2') has, in particular, a latching-hook-shape quality.

6. Electronic control unit according to Claim 5, **characterized in that** at least one projection (14) is provided within the opening (13') for a purpose of frictionally locking and/or positively locking connection to the mount (2) of the valve coil module (1), wherein the projection (14) is arranged between the upper side and underside of the carrier plate (13) or of the circuit board.

7. Electronic control unit according to Claim 6, **characterized in that** the mount (2) has at least one opening or cutout into which the projection (14) of the carrier plate (13) and/or of the circuit board is introduced, and the bearing element (2') of the mount (2) rests on the projection (14).

8. Electronic control unit according to at least one of Claims 1 to 7, **characterized in that** the mount (2) has a gantry-shaped structure, wherein the bearing element (2') connects at least two supporting elements (2''), and the supporting elements (2") are connected on the valve coil side in a materially joined fashion to the cover face (10') of the coil former (10).

9. Electronic control unit according to at least one of Claims 1 to 8, **characterized in that** the carrier plate (13) and/or the circuit board have/has one or more openings (13'') through which the coil connection contacting means (4) is guided.

## Revendications

1. Unité de commande électronique (12) destinée à être connectée à une unité hydraulique dans un système de freinage de véhicule, comprenant
- au moins un module de bobine de vanne (1) pouvant être actionnée électriquement sur un cloche de vanne (8') individuelle de l'unité hydraulique, pour commander une vanne hydraulique électromagnétique,
- au moins une carte de circuit imprimé destinée à recevoir des composants électriques et/ou électroniques pour commander le module de bobine de vanne (1),
- au moins un boîtier (15) renfermant le module de bobine de vanne (1) et la carte de circuit imprimé,
- dans lequel le module de bobine de vanne (1) comprend au moins deux fixations (2), un corps de bobine (10) ayant une ouverture de réception de cloche de vanne (8), un solénoïde (11), un contact de raccordement de bobine (4) et une culasse de bobine (6) enveloppant sous forme d'une gaine le corps de bobine (10) et le solénoïde (11),
dans lequel le module de bobine de vanne (1) est relié par complémentarité de force et/ou de forme à au moins une carte de support (13) et/ou à la carte de circuit imprimé en plus du contact de raccordement de bobine (4) au moins au moyen des fixations (2), **caractérisé en ce que** les fixations (2) sont disposées sur une surface supérieure annulaire (10') du corps de bobine (10) et sont insérées à travers les évidements (9) d'une plaque de protection (5) et font saillie par rapport à la plaque de protection (5) et à la culasse de bobine (6), dans lequel le diamètre intérieur de la surface de protection (10') est formé par l'ouverture de réception de cloche de vanne (8) et les évidements (9) sont conçus de manière à ce que, pour une distance constante entre les fixations (2), des modules de bobine de vanne (1) ayant des diamètres différents puissent être fixés.

2. Unité de commande électronique selon la revendication 1, **caractérisée en ce que** la plaque de support (13) est reliée par complémentarité de matériau au boîtier (15).

3. Unité de commande électronique selon la revendication 1 ou 2, **caractérisée en ce que** le module de bobine de vanne (1) comprend au moins un élément élastique (3) qui est disposé sur une plaque de protection (5) et est relié par complémentarité de matériau et/ou de forme et/ou de force à la plaque de protection (5).

4. Unité de commande électronique selon la revendication 3, **caractérisée en ce que** l'élément élastique (3) du module de bobine de vanne (1) est monté sur une face tournée vers le module de bobine de vanne (1) au niveau de la plaque de support (13) et/ou de la plaque de circuit imprimé et est notamment façonné de manière élastique.

5. Unité de commande électronique selon au moins l'une des revendications 1 à 4, **caractérisée en ce que** la plaque de support (13) ou la carte de circuit imprimé comporte une ou plusieurs ouvertures (13') ou plusieurs évidements à travers lesquels la fixation (2) du module de bobine de vanne (1) est au moins partiellement insérée, dans lequel un élément de support (2') de la fixation (2), sur lequel repose la face de la carte de support (13) et/ou de la carte de circuit imprimé (13) qui est tournée vers le module de bobine de vanne (1) et l'élément de support (2') présentent notamment une configuration d'ergot d'encliquetage.

6. Unité de commande électronique selon la revendication 5, **caractérisée en ce qu'**il est prévu à l'intérieur de l'ouverture (13') au moins une formation (14) permettant une liaison par complémentarité de force et/ou de forme avec la fixation (2) du module de bobine de vanne (1), dans laquelle la formation (14) est disposée entre les faces supérieure et inférieure de la plaque de support (13) ou de la carte de circuit imprimé.

7. Unité de commande électronique selon la revendication 6, **caractérisée en ce que** la fixation (2) présente au moins une ouverture ou un évidement dans lequel ou dans laquelle est introduite la formation (14) de la plaque de support (13) et/ou de la carte de circuit imprimé, et l'élément de support (2') de la fixation (2) repose sur ladite formation (14).

8. Unité de commande électronique selon au moins l'une des revendications 1 à 7, **caractérisée en ce que** la fixation (2) présente une structure en forme d'arceau, dans laquelle l'élément de support (2') relie entre eux au moins deux éléments de soutien (2'') et les éléments de soutien (2'') sont reliés par complémentarité de matériau à la surface supérieure (10') du corps de bobine (10).

9. Unité de commande électronique selon au moins l'une des revendications 1 à 8, **caractérisée en ce que** la plaque de support (13) et/ou la carte de circuit imprimé présente/présentent une ou plusieurs ouvertures (13'') à travers lesquelles est inséré le contact de raccordement de bobine (4).
